# EUROPÄISCHE PATENTSCHRIFT

(11) **EP 2 855 142 B1**
(45) Veröffentlichungstag und Bekanntmachung des Hinweises auf die Patenterteilung: **18.11.2020**
(21) Anmeldenummer: 13730794.8
(22) Anmeldetag: 30.04.2013
(51) Int. Cl.: B32B 5/02, B32B 7/00, B32B 3/12

(54) **BAUPLATTE**
CONSTRUCTION PANEL
PLAQUE DE CONSTRUCTION

(30) Priorität: 30.05.2012 DE 202012005289 U
(43) Veröffentlichungstag der Anmeldung: 08.04.2015
(73) Patentinhaber: Watermann Polyworks GmbH, 32758 Detmold (DE)
(72) Erfinder: WATERMANN, Markus, 32805 Horn-Bad Meinberg (DE)
(74) Vertreter: Helwig, Hans-Martin
(86) Internationale Anmeldenummer: PCT/DE2013/000231
(87) Internationale Veröffentlichungsnummer: WO 2013/178206

(56) Entgegenhaltungen:
- DE-A1-102004 015 472

## Beschreibung

Die Erfindung betrifft eine wenigstens einen, beidseitig auf den Flachseiten mit einer Kaschierung versehenen Wabenkern aufweisende Bauplatte.

Derartige Bauplatten sind in vielfältigen Ausführungsformen bekannt und bewährt. Zumeist sind auf einen Kern aus einem Schaumkunststoff, regelmäßig ein Extrudat, unterschiedliche Beschichtungen, je nach Verwendungszweck beispielsweise aus einem Glasgewebe, Zement, Papier, Kunststofffolie oder dergleichen aufgebracht.

Neben den begrenzten Abmessungen derartiger Bauplatten ist deren Recycling aufgrund der unterschiedlichsten Materialien problematisch und ist das Gewicht, je nach Kaschierung, durchaus einen Handwerker belastend. Insbesondere kann es durch das hohe Eigengewicht zu Deformationen der Bauplatte kommen, die eine Verarbeitung erschweren.

Insbesondere für die Verwendung in Kraftfahrzeugen ist aus der DE 10 2004 015 472 A1 ein Formteil sowie ein Verfahren für dessen Herstellung bekannt geworden. Dieses vorzugsweise selbsttragende Formteil, beispielsweise für die Verwendung als Dachhimmel, ist mehrlagig mit mindestens einer Wabenkammern aufweisenden Wabenschicht und mit mindestens einer weiteren Lage, die auf einer Wabenöffnungen aufweisenden Seite der Wabenschicht angeordnet ist. Diese weitere Lage, ein nur einseitig vernadelter, Kunststofffasern enthaltender Vlieswerkstoff nach Art eines Wirrvlieses, wird unter Wärme und Druck mit den Wabenkammern verbunden. Dabei dringt der Vlieswerkstoff auch in die Wabenkammern ein und stellt dadurch eine sichere und zuverlässige Verbindung mit der Wabenschicht her. Abhängig von der Stärke, mit der der Vlieswerkstoff verpresst und somit verdichtet wird, stellt sich auch die Oberfläche umso fester und steifer dar.

Vor diesem technischen Hintergrund macht die Erfindung es sich zur Aufgabe, eine Bauplatte insbesondere für Feucht- und Nassräume zur Verfügung zu stellen, die eine hohe Druckfestigkeit bei geringem Gewicht aufweist und die eine Vielzahl von Anwendungsmöglichkeiten prinzipiell erlaubt. Durch diese Bauplatte soll darüber hinaus eine ebene Unterlage für beispielsweise aufgeklebte Fliesen gewährleistet werden.

Gelöst wird diese technische Problematik bei einer wenigstens einen, beidseitig auf den Flachseiten mit einer Kaschierung versehenen Wabenkern aufweisende Bauplatte gemäß des Anspruchs 1 durch die Maßnahmen, dass der Wabenkern aus einem Thermoplast besteht und dass die Bauplatte durch gegenläufige Spannungen der Kaschierungen selbst spannungsfrei ist.

Thermoplaste bieten gegenüber herkömmlichen Schaumkunststoffen eine Vielzahl von Vorteilen, beispielsweise hinsichtlich einer formgebenden, spanenden Bearbeitung. Darüber hinaus sind sie über weite Temperaturbereiche formstabil, wobei dennoch durch die Wabenstruktur das Gewicht des Kerns gering gehalten werden kann.

Dies insbesondere dann, wenn der Wabenkern durch eine verformte Folie und/oder durch untereinander verbundene Röhrchen ausgebildet wird.

Es kann dann vorzugsweise das Gewicht des Wabenkerns zwischen 60 kg/m³ und 120 kg/m³ eingestellt werden und sind damit in weiten Bereichen die Eigenschaften des Wabenkerns beeinflussbar.

Solches kann bspw. auch durch die Maßnahme erfolgen, dass Waben verfüllt sind. So kann in weiten Bereichen auch die Funktionalität der Bauplatte nach der Erfindung variiert werden. Insbesondere ist an ein Verfüllen mit einem mineralischen Schaum oder Granulat gedacht, vorzugsweise einem wärmedämmenden Glasschaum bzw. Glasschum-Granulat.

Alternativ können feuerhemmende oder feuerlöschende Pulververfüllungen der Waben den Brandschutz durch die erfindungsgemäße Bauplatte erhöhen. Neben vielen weiteren Füllungen und daraus resultierenden Funktionalitäten sollen feuchtigkeitsregulierende und geruchsbindende Materialien als Pulver- oder Granulatfüllung noch erwähnt werden.

Derartige Wabenkerne können mit einer Materialstärke zwischen 3 mm und 30 mm vergleichsweise einfach und damit kostengünstig hergestellt werden. Größere Materialstärken können durch mehrere Lagen materialschwächerer Wabenkerne erreicht werden.

In konstruktiver Ausgestaltung der Bauplatte nach der Erfindung ist vorgesehen, dass wenigstens eine Flachseite eine Kaschierung aus einem äußeren Vlies und einer darunter liegenden Folie aufweist.

Vliese eignen sich als Haftgrund für Kleber oder Mörtel für beispielsweise einen aufzubringenden Fliesenbelag. Es sollte dann das Vlies aus einem Material bestehen, das beständig gegen alkalische Kleber bzw. Mörtel sowie gegen Tenside in Reinigungsmitteln ist. Hierfür eignen sich bestens Polypropylenvliesstoffe.

Die Folie bestimmt weitgehend die physikalischen Eigenschaften der Bauplatte nach der Erfindung hinsichtlich des Diffundierens von Wasserdampf und des Strömens von Innenraumluft. Wird eine Metallfolie verwendet, beispielsweise aus einem Aluminium, ist die Bauplatte dampfsperrend. Insbesondere ist jedoch an die Verwendung einer Polypropylenfolie gedacht, die sowohl dampfoffen ausgeführt werden kann, beispielsweise mit Kreide gefüllt und anschließend gereckt und/oder gestreckt, oder in anderen Konfigurationen dampfbremsend oder auch dampfsperrend.

Alternativ kann anstelle einer Folie auch an eine Deckschicht aus einem Duroplast gedacht sein, durch die es gleichsam zu einem Verhauten des Wabenkerns kommt. Auch eine solche Bauplatte stellt sich anschließend als dampfsperrend und windsperrend dar.

Optional kann vorgesehen sein, dass zwischen dem Wabenkern der Kaschierung eine Zwischenlage wie ein weiteres Vlies, ein Gewirke oder ein Gestrick angeordnet ist. Dies kann für die Stabilität der Bauplatte von Vorteil sein. Zweckmäßigerweise wird hier wieder eine Zwischenlage aus einem Polypropylen vorgesehen, um die Bauplatte sortenrein aus Polypropylen zu erstellen, was ein Recycling erheblich vereinfacht.

Alternativ sind für diese Lage jedoch auch andere Materialien geeignet, insbesondere Kunststoffe, aber auch organische oder mineralische Fasern wie Carbon, Papier oder Glas, da diese Zwischenlage nicht mit alkalischen Medien oder Tensiden in Kontakt kommen kann.

Das geringe Gewicht der Bauplatte nach der Erfindung, je nach Ausführungsform als Trägerplatte für Fliesenbeläge in Feucht- und Nassräumen, als Ausbauplatte für derartige Räume oder auch als Ausbauplatte für Innenräume mit integrierter Dampfbremse und Windsperre, darüber hinaus bei einer Versiegelung der Schnittkanten als Wärme- und/oder Schalldämmung geeignet, erlaubt Abmessungen von mehr als 60 cm x 200 cm, insbesondere gegenüber herkömmlichen Platten einer Breite von 60 cm ein Standardmaß der Breite von 1,20 m und Längen von mehr als 6 m.

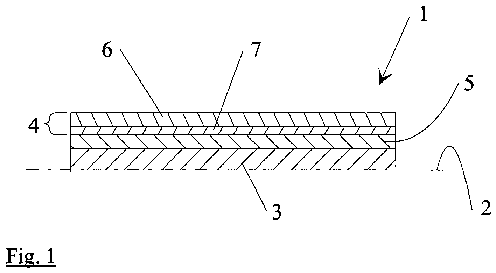

Der Aufbau der Bauplatte nach der Erfindung wird anhand der Zeichnung näher erläutert deren einzige Figur 1 schematisch und nicht maßstabsgerecht einen Schnitt durch eine Bauplatte nach der Erfindung wiedergibt.

Die in der Figur 1 wiedergegebene Bauplatte 1 ist dem Grunde nach zu einer Mittelebene 2 symmetrisch aufgebaut. Wenigstens ein innerer Wabenkern 3 ist mit einer zweilagigen Kaschierung 4 versehen. Optional kann zwischen der Kaschierung 4 und dem Kern 3 noch ein weiteres Vlies, Gewebe oder Gestrick als Zwischenlage 5 vorgesehen sein.

Der Wabenkern 3 besteht vorzugsweise aus einer verformten, gefalteten PP-Folie oder aus PP-Röhrchen eines Gewichts von 60 kg/m³ bis 120 kg/m³. Von einer typischen Materialstärke von 3 mm bis 30 mm ausgehend können durch mehrere Lagen derartiger Wabenkerne 3 auch Bauplatten vergleichsweise großer Materialstärke erstellt werden.

Je nach Verwendungszweck können die Waben noch verfüllt werden, insbesondere mit den Verwendungszweck erfüllenden Schäumen, Pulvern oder Granulaten.

Gegebenenfalls mit dem Wabenkern 3 verklebt besteht die Kaschierung 4 außenliegend aus einem Vlies 6 mit einer darunterliegenden Folie 7. Das Vlies 6 wird bei einer Verwendung als Trägerplatte für Fliesen ein Polypropylenvlies sein, da dieses Material beständig gegenüber alkalischen Klebstoffen oder Mörtel ist und darüber hinaus auch gegenüber Tensiden in Reinigungsmitteln.

Die Folie 7 bestimmt weitgehend die Funktionalität der Bauplatte 1. Durch eine Metallfolie, beispielsweise aus einem Aluminium, wird die Bauplatte 1 dampfsperrend und windsperrend ausgebildet. Eine dampfbremsende oder dampfoffene Ausbildung ist gleichfalls möglich, wenn geeignet ausgebildete PP-Folien Verwendung finden.

Bei einer alternativen Ausbildung der Kaschierung 4 ist unter dem Vlies 6 anstelle der Folie ein Auftrag eines Duroplastes vorgesehen, womit die Bauplatte 1 gleichfalls wieder eine Dampfbremse und eine Windsperre ausbildet.

Optional kann zwischen der Kaschierung 4 und dem Wabenkern 3 noch eine Zwischenlage 5 wie ein Vlies, ein Gewirke oder ein Gestrick angeordnet sein. Da diese Zwischenlage 5 in der Regel mit alkalischen Materialien bzw. Tensiden eines Reinigungsmittels kaum in Berührung kommt, können neben Kunststoffen wie vorzugsweise Polypropylen auch organische und/oder mineralische Fasern als Zwischenlage 5 Verwendung finden.

Bauplatten 1 nach der Erfindung können Abmessungen von vorzugsweise 1,20 m in der Breite bis über 6 m in der Länge aufweisen. Sind die Bauplatten insbesondere vollständig aus Polypropylen gefertigt, ist darüber hinaus ein sortenreines Recycling möglich.

Grundsätzlich ist der Aufbau zu der Mittelebene 2 symmetrisch, von außen nach innen Vlies, Folie oder Duroplast und optional Zwischenlage, wobei Funktionalität und Materialien beidseits der Mittelebene 2 jedoch unterschiedlich gewählt sein können.

## Patentansprüche

1. Wenigstens einen, beidseitig auf den Flachseiten mit einer Kaschierung versehenen Wabenkern aufweisende Bauplatte, **dadurch gekennzeichnet, dass** der Wabenkern (3) aus einem Thermoplast besteht und dass die Bauplatte (1) durch gegenläufige Spannungen der Kaschierungen (4) selbst spannungsfrei ist.

2. Bauplatte nach Anspruch 1, **dadurch gekennzeichnet, dass** der Wabenkern (3) durch eine verformte Folie und/oder durch untereinander verbundene Röhrchen ausgebildet wird.

3. Bauplatte nach einem oder mehreren der vorangehenden Ansprüche, **dadurch gekennzeichnet, dass** das Gewicht des Wabenkerns (3) zwischen 60 kg/m³ und 120 kg/m³ beträgt.

4. Bauplatte nach einem oder mehreren vorangehenden Ansprüche, **dadurch gekennzeichnet, dass** Waben verfüllt sind.

5. Bauplatte nach einem oder mehreren der vorangehenden Ansprüche, **dadurch gekennzeichnet, dass** mehrere Lagen von Wabenkernen vorgesehen sind.

6. Bauplatte nach einem oder mehreren der vorangehenden Ansprüche, **dadurch gekennzeichnet, dass** wenigstens eine Flachseite eine Kaschierung (4) aus einem äußeren Vlies (6) und einer darunter liegenden Folie (7) aufweist.

7. Bauplatte nach einem oder mehreren der vorangehenden Ansprüche 1 bis 4, **dadurch gekennzeichnet, dass** wenigstens eine Flachseite eine Kaschierung aus einem äußeren Vlies und einem darunter liegenden Duroplast aufweist.

8. Bauplatte nach einem oder mehreren der vorangehenden Ansprüche, **dadurch gekennzeichnet, dass** zwischen dem Wabenkern (3) und der Kaschierung (4) eine Zwischenlage (5) wie ein Vlies, ein Gewirke oder ein Gestrick angeordnet ist.

9. Bauplatte nach Anspruch 6, **dadurch gekennzeichnet, dass** die Zwischenlage (5) aus einem Kunststoff oder aus organischen und/oder mineralischen Fasern besteht.

10. Bauplatte nach einem oder mehreren der vorangehenden Ansprüche, **gekennzeichnet durch** flachseitige Abmessungen von mehr als 60 cm x 200 cm.

11. Bauplatte nach einem der mehreren der vorangehenden Ansprüche, **dadurch gekennzeichnet, dass** sie sortenrein aus Polypropylen (PP) besteht.

## Claims

1. Construction panel having at least one honeycomb core provided on both sides on the flat sides with a lamination, **characterized in that** the honeycomb core (3) consists of a thermoplastic and that the construction panel (1) itself is tension-free due to opposing tensions of the laminations (4).

2. Construction panel according to claim 1, **characterized in that** the honeycomb core (3) is configured by a deformed film and/or by interconnected tubes.

3. Construction panel according to one or more of the preceding claims, **characterized in that** the weight of the honeycomb core (3) is between 60 kg/m³ and 120 kg/m³.

4. Construction panel according to one or more of the preceding claims, **characterized in that** honeycombs are infilled.

5. Construction panel according to one or more of the preceding claims, **characterized in that** several layers of honeycomb cores are provided.

6. Construction panel according to one or more of the preceding claims, **characterized in that** at least one flat side has a lamination (4) of an outer non-woven fabric (6) and a film (7) underneath.

7. Construction panel according to one or more of the preceding claims 1 to 4, **characterized in that** at least one flat side has a lamination of an outer non-woven fabric and a thermoset underneath.

8. Construction panel according to one or more of the preceding claims, **characterized in that** an intermediate layer (5) such as a non-woven fabric, a knitted fabric or a crocheted fabric is arranged between the honeycomb core (3) and the lamination (4).

9. Construction panel according to claim 6, **characterized in that** the intermediate layer (5) consists of a plastic or of organic and/or mineral fibers.

10. Construction panel according to one or more of the preceding claims, **characterized by** flat side dimensions of more than 60 cm x 200 cm.

11. Construction panel according to one of the several preceding claims, **characterized in that** it consists of polypropylene (PP) in its pure form.

## Revendications

1. Plaque de construction comportant au moins un noyau alvéolé prévu avec un laminage des deux côtés sur les surfaces planes, **caractérisée en ce que** le noyau alvéolé (3) est constitué d'une matière thermoplastique et **en ce que** la plaque de construction (1) est elle-même exempte de contraintes, dans la mesure où des contraintes opposées sont appliquées dans les laminage (4).

2. Plaque de construction selon la revendication 1, **caractérisée en ce que** le noyau alvéolé (3) est formé par une feuille mise en forme et/ou par des tubes interconnectés.

3. Plaque de construction selon une ou plusieurs des revendications précédentes, **caractérisée en ce que** le poids du noyau alvéolé (3) est compris entre 60 kg/m³ et 120 kg/m³.

4. Plaque de construction selon une ou plusieurs des revendications précédentes, **caractérisée en ce que** les alvéoles sont remplies.

5. Plaque de construction selon une ou plusieurs des revendications précédentes, **caractérisée en ce que** plusieurs couches de noyau alvéolé sont prévues.

6. Plaque de construction selon une ou plusieurs des revendications précédentes, **caractérisée en ce qu'**au moins une surface plane présente un laminage (4) constitué d'un matériau non tissé extérieur (6) et d'une feuille sous-jacente (7).

7. Plaque de construction selon une ou plusieurs des revendications précédentes 1 à 4, **caractérisée en ce qu'**au moins une surface plane présente un laminage constitué d'un matériau non tissé extérieur et d'un plastique thermodurcissable sous-jacent.

8. Plaque de construction selon une ou plusieurs des revendications précédentes, **caractérisée en ce qu'**une couche intermédiaire (5), telle qu'un matériau non tissé, un tissu à mailles ou un tissu tricoté, est agencée entre le noyau alvéolé (3) et le laminage (4).

9. Plaque de construction selon la revendication 6, **caractérisée en ce que** la couche intermédiaire (5) est constituée d'une matière plastique ou de fibres organiques et/ou minérales.

10. Plaque de construction selon une ou plusieurs des revendications précédentes, **caractérisée par** des dimensions de surface plane de plus de 60 cm x 200 cm.

11. Plaque de construction selon l'une des revendications précédentes, **caractérisée en ce qu'**elle est purement constituée de polypropylène (PP).
